# FASCICULE DE BREVET EUROPEEN

(11) **EP 3 396 813 B1**
(45) Date de publication et mention de la délivrance du brevet: **12.02.2020**
(21) Numéro de dépôt: 18163635.8
(22) Date de dépôt: 23.03.2018
(51) Int. Cl.: H02J 50/60

(54) **PROCÉDÉ DE SÉCURISATION D'UN SYSTÈME DE RECHARGE PAR INDUCTION**
SICHERUNGSVERFAHREN EINES INDUKTIONSAUFLADESYSTEMS
METHOD FOR SECURING AN INDUCTION CHARGING SYSTEM

(30) Priorité: 26.04.2017 FR 1753610
(43) Date de publication de la demande: 31.10.2018
(73) Titulaire: PSA Automobiles SA, 78300 Poissy (FR)
(72) Inventeur: SAINFLOU, DAMIEN PIERRE, 95160 MONTMORENCY (FR); M RAD, SABRINE, 92250 LA GARENNE COLOMBES (FR)

(56) Documents cités:
- US-A1- 2014 203 768

## Description

L'invention s'inscrit dans le domaine des dispositifs de recharge sans fils de véhicule automobile électrique ou hybrides rechargeables, fonctionnant à l'aide d'un phénomène d'induction électromagnétique. L'invention s'inscrit notamment dans le domaine de la sécurisation de ces dispositifs.

Les véhicules automobiles électriques ou hybrides rechargeables sont munis d'une batterie ou élément de stockage d'énergie électrique de haute capacité. On s'intéresse aux véhicules munis d'un système de recharge de la batterie par une source extérieure, à une borne de recharge publique ou privée. L'invention s'applique au système de recharge par induction, qui est basé sur la mise en regard l'un de l'autre de deux bobines électromagnétiques, et la transmission d'énergie via un champ électromagnétique qui s'établit entre ces deux bobines. La première bobine, dite primaire est portée par la borne de recharge et elle est fixée au sol, et la deuxième bobine, dite secondaire, est portée par le véhicule généralement fixée sur la face inférieure de celui-ci.

Un problème de sécurité posé par les systèmes de recharge par induction est le risque qu'un animal ou un être humain, en général alors un enfant, insère une partie de son corps, voire l'ensemble de son corps, entre les deux bobines. Les systèmes de recharge par induction sont configurés pour interrompre la charge, pour éviter que le corps intrus subisse des brulures (si celui-ci porte un objet métallique) et/ou perturbe le fonctionnement du système.

Ce problème de sécurité est courant, dans la mesure où les plaques protégeant les bobines atteignent des températures attrayantes et protégées sous le véhicule, ce qui est de nature à attirer notamment les animaux.

Les systèmes de recharge par induction sont équipés de systèmes de détection et protection d'être vivants ou de corps étrangers, notamment de corps métalliques. Ces systèmes interrompent la charge et essayent, à par exemple 5 reprises de la relancer, la relance n'étant pas effectuée si un être vivant ou un corps est encore détecté. Si la recharge n'est pas relancée, une alerte peut être envoyée à l'utilisateur du véhicule pour le prévenir que la recharge est interrompue de manière anormale. L'alerte peut être envoyée par un moyen de communication sans fil, par exemple à destination d'une messagerie électronique, ou d'une application sur un téléphone intelligent (smartphone). Elle peut aussi être affichée sur une interface homme-machine du véhicule ou de la borne de charge.

Le document US 2014/203768 A1 présente une méthode de charge sans fil d'un véhicule selon le préambule de la revendication 1.

Le document US9365126 décrit une sécurisation par détection du corps associée à l'émission d'ultrasons pour repousser les êtres vivants dont les ultrasons font partie du spectre auditif.

Mais il n'est pas connu de système vraiment efficace pour la lutte contre les espèces vivantes qui sont nombreuses, et dont il est difficile de déterminer à l'avance laquelle va s'introduire dans le système.

Pour résoudre ce problème, il est proposé un procédé de sécurisation d'un système de recharge par induction d'un véhicule automobile à batterie rechargeable, comprenant une étape de détection de la présence ou de l'absence d'un corps dans un champ d'observation de sécurité associé aux bobines d'induction, une étape d'interruption de l'induction pour recharge en réaction à une telle détection de présence, une étape d'émission d'ultrasons, à proximité des bobines d'induction pour gêner et éloigner un ou des êtres vivants en réaction à une telle détection de présence, et une étape de relance de l'induction pour recharge en réaction à une détection d'absence.

Selon l'invention, d'une étape d'émission à une autre séparées par une étape de relance, des ultrasons de fréquences différentes sont émis pour gêner des êtres vivants de spectres auditifs différents.

Des caractéristiques avantageuses et optionnelles sont les suivantes :
- Le procédé comprend une étape, après une interruption de l'induction, de tentative de relancer un nombre prédéterminé de fois la recharge par induction, puis en cas d'échecs répétés causés par une présence d'un corps, une étape de transmission d'une alerte à destination d'un utilisateur ;
- les ultrasons sont émis à au moins une fréquence entre 10 et 80 kHz ;
- les ultrasons sont émis à un volume entre 60 et 100 dB ;
- l'étape de détection de la présence ou de l'absence d'un corps dans un champ d'observation de sécurité inclut une détection d'une distorsion du champ magnétique de charge par induction, ou comprend l'utilisation d'un capteur de présence ;
- les ultrasons sont émis avec une variation sinusoïdale de leur fréquence ;
- les ultrasons peuvent être émis vers un secteur angulaire dans lequel une présence a été détectée.

Il est aussi proposé un dispositif de sécurisation d'un système de recharge par induction d'un véhicule automobile à batterie rechargeable, comprenant des moyens de détection de la présence ou de l'absence d'un corps dans un champ d'observation de sécurité associé aux bobines d'induction, des moyens d'interruption de l'induction pour recharge en réaction à une telle détection de présence, des moyens d'émission d'ultrasons, à proximité des bobines d'induction pour gêner un ou des êtres vivants en réaction à une telle détection de présence, et des moyens de relance de l'induction pour recharge en réaction à une détection d'absence par lesdits moyens de détection.

Selon l'invention, le dispositif est configuré pour, d'une émission d'ultrasons à une autre, séparées par une relance, émettre des ultrasons de fréquences différentes pour gêner des êtres vivants de spectres auditifs différents.

À nouveau, des caractéristiques avantageuses et optionnelles sont les suivantes :
- les moyens de détection et les moyens d'émission d'ultrasons sont rattachés matériellement à une borne de recharge fixée au sol ; ou
- les moyens de détection et les moyens d'émission d'ultrasons sont rattachés matériellement au véhicule automobile.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- La figure 1 est une vue d'un véhicule selon l'invention ;
- la figure 2 est une vue d'un système de recharge d'énergie électrique selon l'invention ;
- la figure 3 est un schéma d'un aspect d'un procédé selon l'invention ;
- la figure 4 est un schéma d'un autre aspect d'un procédé selon l'invention.

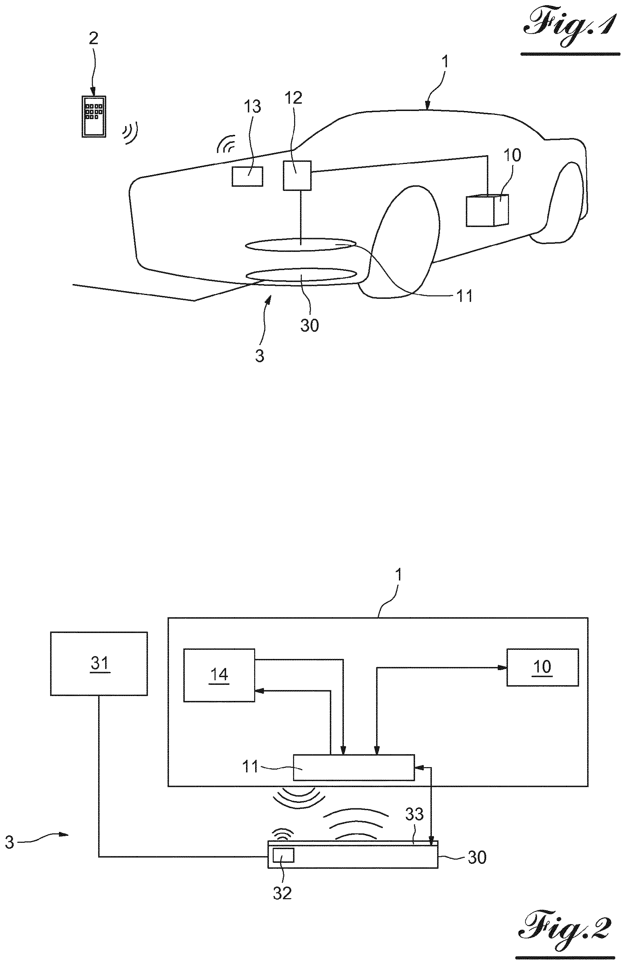

La figure 1 montre un véhicule électrique 1, qui interagit avec un système de commande à distance 2 (ici une application sur un téléphone intelligent, mais une télécommande est aussi possible), et un système fixe de recharge électrique par induction 3 (borne de recharge).

Le véhicule 1 comprend une batterie à haute capacité 10 (dite batterie de traction), une bobine secondaire 11 pour la recharge par induction et un boîtier de distribution de l'électricité 12. Il comprend aussi un système de communication sans fil pour recevoir des informations, notamment des commandes du système de commande à distance 2, et éventuellement lui retourner des informations.

Le système de recharge électrique par induction 3 comprend une bobine primaire 30 pour la recharge par induction. La recharge se fait notamment par la mise en regard l'une de l'autre de la bobine primaire 30 et de la bobine secondaire 11.

Dans certains cas, au lieu d'être utilisé pour la charge de la batterie du véhicule (ou un stockeur différent de la batterie de traction), le couple formé par la bobine primaire et la bobine secondaire peut être utilisé pour décharger la batterie vers le réseau électrique.

En figure 2, on a représenté les éléments relatifs au chargement électrique. Le véhicule 1 comprend un superviseur 14, qui émet à destination notamment de la bobine secondaire 11 des consignes de lancements et d'arrêt de la fonction de recharge inductive. Ces consignes incluent l'analyse de conditions, notamment celle du positionnement du véhicule vis-à-vis du système de recharge, notamment le positionnement relatif des deux bobines. Le superviseur 14 reçoit l'état de fonctionnement des bobines et du processus de charge, en provenance de la bobine secondaire 11. De plus, un dialogue est mené entre la batterie 10 et la bobine secondaire et porte sur la régulation de charge et les consignes de tension et de courant associées. Ce dialogue est similaire à un dialogue entre l'ordinateur de bord et la batterie.

La bobine primaire 30 et la bobine secondaire 11 dialoguent par communication sans fil (de type Wifi, ou radiofréquences), et échangent des données d'appairage et des valeurs de puissance à transmettre par la bobine primaire 30, ainsi qu'un signal de début et un signal de fin de charge.

Un champ électromagnétique s'installe entre les bobines et transfert de l'énergie.

Le système de recharge par induction 3 comprend une interface homme-machine 31 qui offre une aide au positionnement (direction gauche-droite, direction avant-arrière) et un élément de statut de charge (en cours, charge impossible, ou défaut). L'interface 31 reçoit en provenance de la bobine secondaire une information de statut de charge et des éléments relatifs au positionnement relatif des bobines, sous la forme d'un vecteur.

Le système de recharge 3 comprend aussi un émetteur d'ultrasons 32 orienté vers l'entrefer des bobines, quand celles-ci sont bien positionnées l'une par rapport à l'autre. Le système est aussi équipé d'un détecteur d'objet et/ou d'être vivant 33, et le détecteur 33 transmet à l'interface homme-machine 31 des informations de détection (statut être vivant détecté et statut objet détecté). Le détecteur d'objet et/ou d'être vivant 33 peut fonctionner par détection de distorsion de champ magnétique ou par des capteurs de présence. Il a une bonne symétrie, en l'absence d'information sur la directivité de l'intrusion dans le champ magnétique.

Comme cela ressort du paragraphe précédent, l'émetteur d'ultrasons 32 est représenté sur la figure 2 fixé et incorporé à un châssis ou à l'enveloppe de la bobine primaire 30. Le détecteur d'objet et/ou d'être vivant 33 est également fixé et incorporé à ce châssis ou à cette enveloppe. Ainsi, ils sont embarqués dans la partie fixe du couple de bobines et donc rattachés à la borne de recharge fixée au sol.

Alternativement, l'émetteur d'ultrasons 32 et le détecteur d'objet et/ou d'être vivant 33 peuvent être également fixés et incorporés à un châssis ou à une enveloppe de la bobine secondaire 11. Ainsi, ils sont embarqués dans la partie mobile du couple de bobines, et donc rattachés au véhicule automobile.

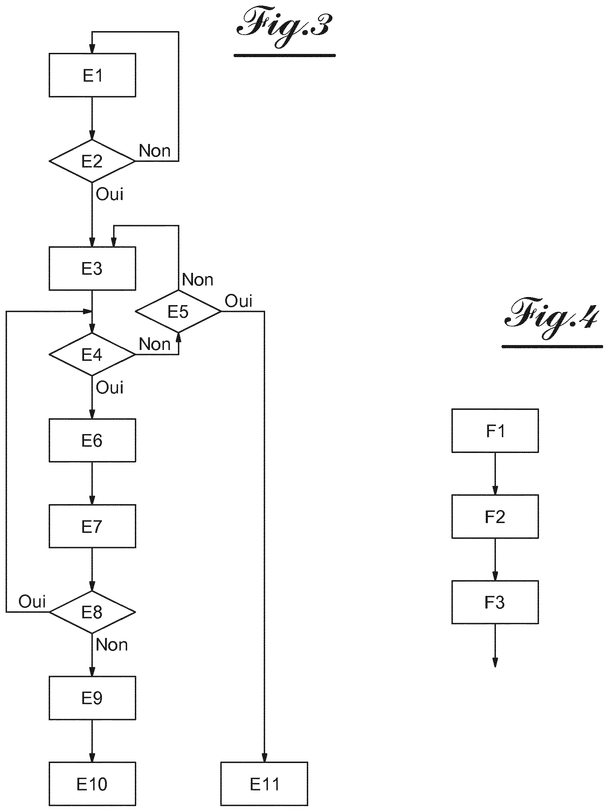

La figure 3 montre le procédé suivi lors d'une phase de charge du véhicule 1 à l'aide du système de recharge électrique par induction 3.

Au cours d'une étape E1, on débute la charge inductive. Puis, lors d'une étape E2, on effectue un test pour savoir sur les conditions pour mener la charge inductive sont réunies. Si ce n'est pas le cas, on retourne à l'étape E1. Si c'est le cas, à l'inverse, on poursuit avec une étape E3 par laquelle la charge inductive est menée. Régulièrement, un test est effectué au cours d'une étape E4, par laquelle on vérifie si un objet ou un être vivant est détecté. Si ce n'est pas le cas, on retourne en étape E3, après avoir vérifié que les conditions de fin de charge ne sont pas réunies, au cours d'une étape E5.

Si au cours de l'étape E4 un objet ou un être vivant a été détecté, on poursuit par une étape E6 de suspension de la charge inductive, et une étape E7 d'émission d'ultrasons. Un compteur initialement à la valeur 0 est incrémenté. Les étapes E4, E6 et E7 sont répétées plusieurs fois avec à chaque fois une tentative de reprendre la charge si aucun objet ou aucun être vivant n'est détecté. Une étape E8 de test est menée pour savoir si le compteur n'est pas parvenu à un seuil où les tentatives de relance doivent être arrêtées. Si c'est le cas, on passe à une étape E9 d'alerte de l'interface homme-machine du client d'un défaut de charge, et à une étape E10 d'arrêt du processus de charge, avec enregistrement d'une information de défaut.

Si au cours de l'étape E5, on constate que les conditions de fin de charge sont réunies, on arrête la charge, avec enregistrement d'une information de fin de charge normale.

Dans l'invention, l'émetteur d'ultrasons 32 est activé sur la base de la détection menée par le détecteur d'objet et/ou d'être vivants 33, qui détecte l'intrusion à proximité de ou dans l'espace dans lequel se développe le champ magnétique.

L'émetteur 32 peut être rattaché matériellement à la bobine primaire ou à la bobine secondaire. Il émet à une ou plusieurs fréquences (ou sur un intervalle - ou plusieurs intervalles - de fréquences) entre 10 et 80 kHz, à une puissance sonore de l'ordre de 60 à 100 dB.

Quand un objet ou un être vivant est détecté à proximité de l'espace où se développe le champ magnétique, l'induction est stoppée, et l'émission d'ultrasons est engagée.

Si une nouvelle intrusion est détectée après relance de la charge (il s'agit alors d'une nouvelle séquence d'émission d'ultrasons), des ultrasons à une autre fréquence ou d'une autre gamme de fréquences sont émis, pour que les ultrasons soient perçus par différentes espèces animales (insectes, rongeurs, chats, chiens) ou par des enfants humains. Dans le cas d'une fréquence unique, la valeur de la fréquence peut varier de manière sinusoïdale au cours d'une séquence.

En figure 4, on visualise une première étape d'émission d'ultrasons F1, puis une étape de relance de la charge électrique F2, puis une deuxième étape d'émission d'ultrasons F3, au cours d'une récidive. Au cours de cette récidive, les fréquences utilisées sont différentes de celles utilisées lors de la première étape F1.

Alternativement, une plage de fréquences peut être balayée au cours d'une séquence donnée toujours pour que les ultrasons soient perçus par différentes espèces animales ou par des enfants humains. La largeur de la gamme peut être élargie progressivement, au cours d'une séquence ou d'une séquence à l'autre. La puissance sonore peut être augmentée d'une séquence à une autre.

Cela permet d'augmenter le taux de la répulsion d'être vivants créée par les ultrasons et la réussite de la tentative suivante de redémarrage de la recharge, après plusieurs séquences.

Dans certaines variantes, les ultrasons sont émis de manière continue, indépendamment de la détection d'un objet ou d'un être vivant.

Les étapes des figures 3 et 4 sont toutes mises en œuvre à l'aide de moyens correspondants embarqués dans la borne de recharge fixée au sol, ou dans une variante dans le véhicule automobile. De préférence, les étapes E6 et E8 à E10 sont mises en œuvre à l'aide de moyens présents dans celui de la borne ou du véhicule qui comprend le détecteur de présence qui effectue l'étape E4 et l'émetteur d'ultrasons qui effectue les étapes E7, F1 et F3, quand ceux-ci sont tous les deux soit dans la borne soit dans le véhicule. Les étapes E1 à E3, E5 et E11 et F2 sont effectuées par l'ensemble constitué de la borne et du véhicule, comprenant les bobines primaire et secondaire.

Si le détecteur 33 est configuré pour identifier un secteur angulaire du volume surveillé dans lequel l'objet ou l'être vivant est repéré, l'émetteur 32 peut être configuré est pour être en mesure d'émettre les ultrasons uniquement dans l'espace concerné.

Il est fait remarquer qu'il est possible aussi de remplacer les ultrasons par l'utilisation du klaxon du véhicule.

Le détenteur du véhicule peut être prévenu sur son téléphone intelligent 2 ou tout autre interface homme machine portable ou fixe, du fait que la recharge est interrompue, qu'une tentative de relance est en cours, que la tentative a réussi, ou qu'elle a échoué, ou encore que la recharge est définitivement interrompue aboutissant à un échec de la recharge et un mode défaut.

Dans certaines circonstances, il peut être décidé d'émettre des sons audibles par l'être humain adulte.

Au final, le dispositif est très efficace pour éloigner les animaux de toutes espèces, et s'adapte bien à la situation où il n'est pas connu à l'avance quel type d'espèce animale sera concernée. Les êtres vivants aux alentours et en-dessous du véhicule au cours d'une recharge par induction, ainsi que le véhicule et son système de recharge sont donc protégés, et la prestation offerte au client est de meilleure qualité.

## Revendications

1. Procédé de sécurisation d'un système de recharge par induction d'un véhicule automobile (1) à batterie rechargeable (10), comprenant une étape de détection (E4) de la présence ou de l'absence d'un corps dans un champ d'observation de sécurité associé aux bobines d'induction (30, 11), une étape d'interruption (E6) de l'induction pour recharge en réaction à une telle détection de présence, une étape d'émission (E7, F2) d'ultrasons, à proximité des bobines d'induction (30, 11) pour gêner et éloigner un ou des êtres vivants en réaction à une telle détection de présence, et une étape de relance de l'induction pour recharge en réaction à une détection d'absence, **caractérisé en ce que**, d'une étape d'émission (F1) à une autre (F3) séparées par une étape de relance (E7, F2), des ultrasons de fréquences différentes sont émis pour gêner et éloigner des êtres vivants de spectres auditifs différents.

2. Procédé de sécurisation d'un système de recharge selon la revendication 1, **caractérisé en ce qu'**il comprend une étape, après une interruption de l'induction, de tentative de relancer (E4, E8) un nombre prédéterminé de fois la recharge par induction, puis en cas d'échecs répétés causés par une présence d'un corps, une étape de transmission (E9) d'une alerte à destination d'un utilisateur.

3. Procédé de sécurisation d'un système de recharge selon la revendication 1 ou la revendication 2, **caractérisé en ce que** les ultrasons sont émis à au moins une fréquence entre 10 et 80 kHz.

4. Procédé de sécurisation d'un système de recharge selon l'une des revendications 1 à 3, **caractérisé en ce que** les ultrasons sont émis à un volume entre 60 et 100 dB.

5. Procédé de sécurisation d'un système de recharge selon l'une des revendications 1 à 4, **caractérisé en ce que** l'étape de détection (33) de la présence ou de l'absence d'un corps dans un champ d'observation de sécurité inclut une détection d'une distorsion du champ magnétique de charge par induction, ou comprend l'utilisation d'un capteur de présence.

6. Procédé de sécurisation d'un système de recharge selon l'une des revendications 1 à 5, **caractérisé en ce que** les ultrasons sont émis vers un secteur angulaire dans lequel une présence a été détectée.

7. Dispositif de sécurisation d'un système de recharge par induction d'un véhicule automobile à batterie rechargeable (10), comprenant des moyens de détection (33) de la présence ou de l'absence d'un corps dans un champ d'observation de sécurité associé aux bobines d'induction (30, 11), des moyens d'interruption de l'induction pour recharge en réaction à une telle détection de présence, des moyens d'émission (32) d'ultrasons, à proximité des bobines d'induction (30, 11) pour gêner un ou des êtres vivants en réaction à une telle détection de présence, et des moyens de relance de l'induction pour recharge en réaction à une détection d'absence par lesdits moyens de détection, **caractérisé en ce que** le dispositif est configuré pour, d'une émission (F1) d'ultrasons à une autre (F3), séparées par une relance (E7, F2), émettre des ultrasons de fréquences différentes pour gêner des êtres vivants de spectres auditifs différents.

8. Dispositif de sécurisation d'un système de recharge selon la revendication 7, **caractérisé en ce que** les moyens de détection (33) et les moyens d'émission (32) d'ultrasons sont rattachés matériellement à une borne de recharge fixée au sol.

9. Dispositif de sécurisation d'un système de recharge selon la revendication 7, **caractérisé en ce que** les moyens de détection (33) et les moyens d'émission (32) d'ultrasons sont rattachés matériellement au véhicule automobile.

## Patentansprüche

1. Sicherungsverfahren eines Induktionsladesystems eines Kraftfahrzeugs (1) mit aufladbarer Batterie (10), das einen Erfassungsschritt (E4) der Anwesenheit oder Abwesenheit eines Körpers in einem Sicherheitsbeobachtungsfeld, das mit den Induktionsspulen (30, 11) assoziiert ist, einen Unterbrechungsschritt (E6) der Induktion für das Aufladen als Reaktion auf eine solche Anwesenheitserfassung, einen Ultraschallsendeschritt (E7, F2) in der Nähe der Induktionsspulen (30, 11), um ein oder mehrere Lebewesen als Reaktion auf eine solche Anwesenheitserfassung zu hemmen oder zu verjagen, und einen Wiederaufnahmeschritt der Induktion zum Aufladen als Reaktion auf eine Abwesenheitserfassung umfasst, **dadurch gekennzeichnet, dass** ein Sendeschritt (F1) und ein anderer (F3), die durch einen Wiederaufnahmeschritt (E7, F2) getrennt sind, Ultraschall mit unterschiedlichen Frequenzen gesendet wird, um Lebewesen mit unterschiedlichen Gehörspektren zu hemmen oder zu verjagen.

2. Sicherungsverfahren eines Ladesystems nach Anspruch 1, **dadurch gekennzeichnet, dass** es nach einer Unterbrechung der Induktion einen Schritt des Versuchens der Wiederaufnahme (E4, E8) einer vorbestimmten Anzahl Male des Ladens durch Induktion umfasst, dann, im Fall wiederholten Scheiterns, das durch eine Anwesenheit eines Körpers verursacht wird, einen Übertragungsschritt (E9) einer Warnung zu einem Benutzer.

3. Sicherungsverfahren eines Ladesystems nach Anspruch 1 oder Anspruch 2, **dadurch gekennzeichnet, dass** der Ultraschall mit mindestens einer Frequenz zwischen 10 und 80 kHz gesendet wird.

4. Sicherungsverfahren eines Ladesystems nach einem der Ansprüche 1 bis 3, **dadurch gekennzeichnet, dass** der Ultraschall mit einer Lautstärke zwischen 60 und 100 dB gesendet wird.

5. Sicherungsverfahren eines Ladesystems nach einem der Ansprüche 1 bis 4, **dadurch gekennzeichnet, dass** der Erfassungsschritt (33) der Anwesenheit oder Abwesenheit eines Körpers in einem Sicherheitsbeobachtungsfeld ein Erfassen einer Verzerrung des Induktionslademagnetfelds umfasst, oder die Verwendung eines Anwesenheitssensors umfasst.

6. Sicherungsverfahren eines Ladesystems nach einem der Ansprüche 1 bis 5, **dadurch gekennzeichnet, dass** der Ultraschall zu einem Winkelsektor, in dem eine Anwesenheit erfasst wurde, gesendet wird.

7. Sicherungsvorrichtung eines Induktionsladesystems eines Kraftfahrzeugs mit aufladbarer Batterie (10), die Mittel zum Erfassen (33) der Anwesenheit oder der Abwesenheit eines Körpers in einem Sicherheitsbeobachtungsfeld, das mit Induktionsspulen (30, 11) assoziiert ist, Mittel zum Unterbrechen der Induktion zum Laden als Reaktion auf eine solche Anwesenheitserfassung, Ultraschallsendemittel (32) in der Nähe der Induktionsspulen (30, 11), um ein oder mehrere Lebewesen als Reaktion auf eine solche Anwesenheitserfassung zu hemmen oder zu verjagen, und Mittel zum Wiederaufnehmen der Induktion zum Laden als Reaktion auf eine Abwesenheitserfassung durch die Erfassungsmittel umfasst, **dadurch gekennzeichnet, dass** die Vorrichtung konfiguriert ist, um von einem Senden (F1) von Ultraschall zu einem anderen (F3), die von einer Wiederaufnahme (E7, F2) getrennt sind, Ultraschall mit unterschiedlichen Frequenzen zu senden, um Lebewesen mit unterschiedlichen Gehörspektren zu hemmen.

8. Sicherungsvorrichtung eines Ladesystems nach Anspruch 7, **dadurch gekennzeichnet, dass** die Erfassungsmittel (33) und die Ultraschallsendemittel (32) materiell an eine Ladestation, die auf dem Boden befestigt ist, angefügt sind.

9. Sicherungsvorrichtung eines Ladesystems nach Anspruch 7, **dadurch gekennzeichnet, dass** die Erfassungsmittel (33) und die Ultraschallsendemittel (32) materiell an dem Kraftfahrzeug angefügt sind.

## Claims

1. A method for securing an induction charging system of a motor vehicle (1) with a rechargeable battery (10), including a detection step (E4) of the presence or absence of a body in a security observation field associated with the induction coils (30, 11), a step of interruption (E6) of the induction for recharging as a rection to such a detection of presence, an emission step (E7, F2) of ultrasound waves, close to the induction coils (30, 11), to disturb and drive away one or more living beings as a reaction to such a detection of presence, and a step of relaunch of the induction for recharge as a reaction to a detection of absence, **characterized in that**, from one emission step (F1) to another (F3), separated by a relaunch step (E7, F2), ultrasound waves of different frequencies are emitted for disturbing and driving away living beings with different auditory spectra.

2. The method for securing a charging system according to Claim 1, **characterized in that** it includes a step, after an interruption of the induction, of an attempt for relaunching (E4, E8) a predetermined number of times the induction charging, then in the case of repeated failures caused by a presence of a body, a step of transmission (E9) of a warning to a user.

3. The method for securing a charging system according to Claim 1 or Claim 2, **characterized in that** the ultrasound waves are emitted at at least one frequency between 10 and 80 kHz.

4. The method for securing a charging system according to one of Claims 1 to 3, **characterized in that** the ultrasound waves are emitted at a volume between 60 and 100 dB.

5. The method for securing a charging system according to one of Claims 1 to 4, **characterized in that** the step of detection (33) of the presence or absence of a body in a security observation field includes a detection of a distortion of the magnetic field of induction charging, or includes the use of a presence sensor.

6. The method for securing a charging system according to one of Claims 1 to 5, **characterized in that** the ultrasound waves are emitted towards an angular sector in which a presence has been detected.

7. A device for securing an induction charging system of a motor vehicle with a rechargeable battery (10), including detection means (33) of the presence or the absence of a body in a security observation field associated with the induction coils (30, 11), means for interruption of the induction for recharging in reaction to such a detection of presence, means for emission (32) of ultrasound waves, close to the induction coils (30, 11), to disturb one or more living beings in reaction to such a detection of presence, and means for relaunch of the induction for recharging in reaction to a detection of absence by said detection means, **characterized in that** the device is configured, from one emission (F1) of ultrasound waves to another (F3), separated by a relaunch (E7, F2), to emit ultrasound waves of different frequencies to disturb living beings with different auditory spectra.

8. The device for securing a charging system according to Claim 7, **characterized in that** the detection means (33) and the emission means (32) of ultrasound waves are attached materially to a charging point fixed to the ground.

9. The device for securing a charging system according to Claim 7, **characterized in that** the detection means (33) and the emission means (32) of ultrasound waves are attached materially to the motor vehicle.
